# EUROPÄISCHE PATENTSCHRIFT

(11) **EP 2 971 426 B1**
(45) Veröffentlichungstag und Bekanntmachung des Hinweises auf die Patenterteilung: **19.04.2017**
(21) Anmeldenummer: 15705478.4
(22) Anmeldetag: 26.01.2015
(51) Int. Cl.: E06B 3/673

(54) **VERFAHREN ZUM FÖRDERN VON ISOLIERGLAS-ROHLINGEN**
METHOD FOR CONVEYING INSULATION GLASS BLANKS
PROCÉDÉ DE TRANSPORT D'ÉBAUCHES EN VERRE ISOLANT

(30) Priorität: 27.01.2014 AT 542014
(43) Veröffentlichungstag der Anmeldung: 20.01.2016
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2015/000010
(87) Internationale Veröffentlichungsnummer: WO 2015/109348

(56) Entgegenhaltungen:
- DE-A1- 3 942 960
- DE-B1- 2 816 437
- DE-U1- 8 318 401

## Beschreibung

Die Erfindung betrifft ein Verfahren mit den Merkmalen des einleitenden Teils von Anspruch 1.

Horizontalförderer, die am unteren Rand eines im Wesentlichen lotrecht ausgerichteten Isolierglas-Rohlings angreifen, sind bekannt. Diese Fördereinrichtungen fördern Isolierglas-Rohlinge, um sie einer Versiegelungsstation zuzuführen, während sie versiegelt werden, und um versiegelte Isolierglas-Rohlinge nach dem Versiegeln einer weiteren Bearbeitung oder Lagerung zuzuführen.

Ein weiteres Einsatzgebiet von Horizontalförderern für Isolierglas-Rohlinge oder versiegelte Isolierglas-Rohlinge ist das Fördern von versiegelten Isolierglas-Rohlingen nach der Versiegelungsstation, um diese einer weiteren Transportvorrichtung zu übergeben, die über einen Horizontalförderer verfügt.

Problematisch beim Fördern von frisch versiegelten Isolierglas-Rohlingen und auch beim Bewegen von Isolierglas-Rohlingen während des Versiegelns ist es, dass Versiegelungsmasse die Fördermittel der Horizontalförderer verschmutzt, insbesondere wenn Versiegelungsmasse über die Randfuge vorsteht und beispielsweise die Ränder der Glasscheiben des Isolierglas-Rohlinges übergreift. Dies kann so weit gehen, dass die Versiegelungsmasse vom Fördermittel aus der Randfuge wieder herausgezogen wird.

Zum Fördern von Isolierglas-Rohlingen während des Versiegelns und zum Fördern von frisch versiegelten Isolierglas-Rohlingen sind verschiedene Vorrichtungen vorgeschlagen worden, welche die oben geschilderten Probleme vermeiden sollen.

Ein Vorschlag besteht darin, an der Unterkante des Isolierglas-Rohlings angreifende Fördermittel so auszubilden, dass an ihnen Isolierglasversiegelungsmasse nicht haftet, wozu die am Isolierglas-Rohling angreifenden Teile der Fördermittel aus einem Antihaftmaterial bestehen oder mit einem Antihaftmaterial beschichtet sein können. Dies hat sich aber als eine wenig zuverlässige Maßnahme erwiesen.

Vorgeschlagen wurden auch Fördermittel (Horizontalförderer) für Isolierglas-Rohlinge die L-förmige Auflager aufweisen, wie dies beispielsweise aus der AT 384 596 B und der AT 396 782 B bekannt ist. Diese Förderer haben sich an sich gut bewährt. Problematisch ist es nur, wenn sich Versiegelungsmasse bis über die Ränder der Glasscheiben des Isolierglas-Rohlings erstreckt, da auch dann die L-förmigen Auflager mit Versiegelungsmasse in Berührung kommen und verschmutzt werden.

Aus der WO 92/05333 A ist eine Fördervorrichtung für Isolierglas bekannt, deren Horizontalförderer mit V-förmigen Stützflächen ausgebildet ist, wozu entweder V-förmige angeordnete Förderbänder oder Auflager mit V-förmigen Vertiefungen vorgesehen werden, sodass die Horizontalförderer ausschließlich an den Außenkanten der Glasscheiben des Isolierglas-Rohlings angreifen. Nachteil bei dieser bekannten Fördervorrichtung ist, dass die scharfen Kanten der Glasscheiben die Fördereinrichtungen rasch verschleißen.

Bekannt ist auch ein Horizontalförderer für Isolierglas-Rohlinge mit zwei nebeneinander angeordneten Förderbändern. Die Förderbänder haben voneinander einen Abstand, welcher der Breite des Abstandhalters im Isolierglas-Rohling entspricht, sodass der Isolierglas-Rohling nur mit den unteren Rändern der Glasscheiben auf den Förderbändern der Fördervorrichtung aufsteht. Diese Fördereinrichtung kann auch für das Fördern von sogenannten Stufenelementen (eine Glasscheibe des Isolierglas-Rohlings ist kleiner als die andere) geeignet, da die Förderbänder unabhängig voneinander angehoben oder abgesenkt werden können.

Aus der DE 28 46 785 B ist eine Versiegelungsvorrichtung bekannt, deren Förderbänder mit noppenförmigen Auflagern bestückt sind. Dadurch ist die Wahrscheinlichkeit des Verschmutzens im Vergleich zu Förderbändern ohne Auflager verringert, es kann jedoch immer wieder vorkommen, dass mit Noppen bestückte Förderbänder mit Versiegelungsmasse in Berührung kommen, insbesondere in Eckbereichen von Isolierglas-Rohlingen, da die Versiegelung im Eckbereich oft über den Außenumfang des Isolierglas-Rohlings vorstehen kann.

Aus der DE 39 42 960 A ist eine Vorrichtung zum Fördern von am Rand miteinander verklebten Isolierglasscheiben bekannt. Die bekannte Vorrichtung hat einen Horizontalförderer, welcher ein endloses Förderglied hat, welches um Umlenkräder mit ungefähr waagerechter Drehachse herumgeführt ist und an welchem Auflager für den unteren Rand der Isolierglasscheiben vorgesehen sind, und eine oberhalb des Horizontalförderers angeordnete, sich parallel zu ihm erstreckende Abstützeinrichtung zum seitlichen Abstützen der auf den Auflagern stehenden Isolierglasscheiben. Die Auflager haben eine satteldachförmige Oberseite mit quer zur Förderrichtung verlaufendem First und bestehen aus Aluminium oder aus einem Werkstoff mit ähnlich niedriger Härte wie Aluminium, und unterhalb des Fördergliedes ist eine Reinigungsvorrichtung für die Auflager am Untertrum des Fördergliedes vorgesehen.

Eine ähnliche Vorrichtung ist aus der DE 28 16 437 B bekannt.

Sowohl die DE 39 42 960 A als auch die DE 28 16 437 B zeigen Situationen, in welchen die Auflager am Horizontalförderer mit Abstand von Ecken, der Isolierglasscheibe angeordnet sind, ebenso wie Situationen, in denen Auflager an Ecken der Isolierglasscheibe angreifen. Es sind keine Maßnahmen geoffenbart, die zweitgenannte Situation zu vermeiden.

Der Erfindung liegt die Aufgabe zugrunde, das Fördern von Isolierglas-Rohlingen so zu verbessern, dass die Gefahr von Verschmutzungen der Fördermitteln erheblich verringert, wenn nicht ausgeschaltet ist.

Gelöst wird diese Aufgabe erfindungsgemäß mit einem Verfahren, welches die Merkmale von Anspruch 1 aufweist.

Bevorzugte und vorteilhafte Ausgestaltungen der Erfindung sind Gegenstand der Unteransprüche.

Da bei dem erfindungsgemäßen Verfahren so gearbeitet wird, dass Auflager an dem Fördermittel so positioniert werden, dass sie am Isolierglas-Rohling nicht in einem Bereich angreifen, in dem Versiegelungsmasse über den Außenumfang des Isolierglas-Rohlings vorstehen kann (dies sind insbesondere Eckbereiche), ist die Gefahr, dass beim erfindungsgemäßen Verfahren Auflager des Fördermittels mit Versiegelungsmasse in Berührung kommen und dabei verschmutzt werden, erheblich verkleinert, wenn nicht vermieden.

Das erfindungsgemäße Verfahren kann in einer Versiegelungsstation angewendet werden oder aber es sind Fördermittel vorgesehen, die nach der Versiegelungsstation vorgesehen sind und nach dem erfindungsgemäßen Verfahren angewendet werden.

Wenn Fördermittel unter Anwendung des erfindungsgemäßen Verfahrens in einer Versiegelungsstation vorgesehen sind, sind in der Regel zwei Fördermittel vorgesehen, zwischen denen eine Unterbrechung vorliegt, in der eine Versiegelungsdüse angeordnet ist und zum Versiegeln des unteren Abschnittes der Randfuge eingesetzt wird. Bei beiden Fördermitteln wird bei Anwendung des erfindungsgemäßen Verfahrens so gearbeitet, dass deren Auflager nicht mit den Eckbereichen von Isolierglas-Rohlingen in Berührung kommen.

Die erfindungsgemäßen Auflager, die nach der Art von Bänkchen ausgebildet sein können, können zylinderabschnittförmig (rehrückenförmig), quaderförmig oder aber mit konkaver Wirkfläche, also einer Fläche, die am Isolierglas-Rohling angreift, ausgebildet sein. Bei konkaven Wirkflächen können diese V-förmig vertieft ausgebildet sein, sodass die Auflager nur an den Außenkanten der Glasscheiben des Isolierglas-Rohlings angreifen.

Im Rahmen der Erfindung können Auflager verwendet werden, die aus einem Werkstoff bestehen, auf dem Versiegelungsmasse nicht oder nur wenig haftet, oder aber die Auflager sind mit einem solchen Material beschichtet.

Die Auflager können Ausformungen (bereichsweise Verdickungen oder Ausstülpungen) eines Förderbandes des Fördermittels sein oder aber es sind Auflager mit dem Förderband des Fördermittels verbunden, beispielsweise angeklebt, angeschraubt oder aufgeschoben.

Im Rahmen der Erfindung ist in Betracht gezogen, Auflager zu verwenden, die an dem Förderband des Fördermittels lösbar befestigt sind, sodass diese gewechselt werden können und der Abstand der Auflager voneinander durch Hinzufügen oder Abnehmen von Auflagern verändert werden kann.

Im Rahmen der Erfindung ist auch in Betracht gezogen, Fördermittel mit zwei Förderbändern auszugestalten, die in unterschiedlicher Höhenausrichtung verstellt werden können, sodass Stufenelemente transportiert werden können.

Für das Transportieren von Stufenelementen können auch gestufte Auflager eingesetzt werden, wobei die Abmessungen der gestuften Auflager so gewählt werden, dass sie den Abmessungen der Stufe des Isolierglas-Rohlinges entsprechen. Hiezu kann beispielsweise vorgesehen sein, dass jeweils solche gestuften Auflager am Förderband des Fördermittels angebracht werden, die den Abmessungen der Stufe des Isolierglas-Rohlings entsprechen.

Im Rahmen der Erfindung wird in der Regel mit einem Fördermittel gearbeitet, dass mit Auflagern versehen ist, die einen hinreichenden Reibschluss für den schlupffreien Transport des Isolierglas-Rohlings gewährleisten. Insbesondere wenn der Isolierglas-Rohling zu versiegeln ist, kann es für gleichmäßige und kontrollierte Bewegungen des Isolierglas-Rohlings erforderlich sein, zusätzliche Fördermittel (Mitnehmer, Förderbänder, an einer Großfläche des Isolierglas-Rohlings angreifende Sauger oder Saugbänder und dgl.) anzusetzen, die beim erfindungsgemäßen Verfahren zusätzlich zu dem Fördermittel des Horizontalförderers tätig werden.

Wenn beim erfindungsgemäßen Verfahren die Fördermittel wenigstens ein endloses Förderband aufweisen, auf dem die Auflager vorgesehen sind, können dem Trum des Förderbandes, das für das Abstützen eines Isolierglas-Rohlings gerade nicht benötigt wird, also dem unteren Trum, Reinigungsvorrichtungen in Form von Bürsten oder dgl. zugeordnet sein. Diese Bürsten oder dgl. können beispielsweise drehangetriebene Rundbürsten sein.

Im Rahmen der Erfindung ist in Betracht gezogen so zu arbeiten, dass Auflager vom Fördermittel, beispielsweise unteren Trum eines Förderbandes, gegebenenfalls maschinell, abgenommen werden und nach dem Reinigen, gegebenenfalls maschinell, wieder angesetzt werden.

In einer Ausführungsform des erfindungsgemäßen Verfahrens ist vorgesehen, Anfang und Ende (in Förderrichtung betrachtet) eines Isolierglas-Rohlings relativ zu den Auflagern auf dem Fördermittel, das den Isolierglas-Rohling übernimmt, so auszurichten (zu positionieren) dass ein Verschmutzen der Auflager des Fördermittels durch Versiegelungsmasse vermieden ist, indem so gearbeitet wird, dass Eckbereiche eines versiegelten Isolierglas-Rohlings nicht mit einem Auflager des Fördermittels in Berührung kommen.

Hierzu kann beispielsweise so gearbeitet werden, dass die Lage des Anfanges eines Isolierglas-Rohlings mit Hilfe einer Lichtschranke erfasst oder aus bekannten Parametern der Größe des Isolierglas-Rohlings ermittelt wird. Genauso wird das Ende des Isolierglas-Rohlings aus einer Messung oder aus Anfangsposition und Vorschubgeschwindigkeit ermittelt. Auf Grund der so erfassten Positionen der (unteren) Ecken des Isolierglas-Rohlings werden die Auflager auf dem Fördermittel, das den Isolierglas-Rohling zu übernehmen hat, so bewegt, dass diese am Isolierglas-Rohling nicht im Bereich einer seiner Ecken angreifen. Dabei genügt es in einer Ausführungsform, wenn ausschließlich die Position eines Auflagers auf dem Fördermittel bekannt ist. Dies ist besonders einfach, wenn die Auflager gemäß einer beispielhaften Ausführungsform am Fördermittel voneinander gleiche Abstände haben.

Das Bewegen der Auflager, um diese mit Abstand von den Ecken des Isolierglas-Rohlings am Isolierglas-Rohling angreifen zu lassen, kann durch Beschleunigen oder Verzögern des Fördermittels, auf das der Isolierglas-Rohling übergeben werden soll, oder durch Beschleunigen oder Verzögern der Fördereinheit, von welcher der Isolierglas-Rohling übernommen wird, erfolgen.

In einer beispielhaften Ausführungsform des erfindungsgemäßen Verfahrens wird so vorgegangen, dass Abstände von Auflagern am Fördermittel verändert werden.

In einer beispielhaften Ausführungsform des erfindungsgemäßen Verfahrens wird so vorgegangen, dass Abstände von Auflagern am Fördermittel durch Ansetzen von Auflagern an das Fördermittel und/oder Abnehmen von Auflagern vom Fördermittel geändert werden.

In einer beispielhaften Ausführungsform des erfindungsgemäßen Verfahrens wird so vorgegangen, dass Abstände von Auflagern am Fördermittel geändert werden, indem ein zwei Förderbänder umfassendes Fördermittel verwendet wird, wobei an den Förderbändern Auflager das jeweils andere Förderband übergreifend angeordnet sind und dass die Relativlage der Förderbänder zueinander verändert wird.

In einer beispielhaften Ausführungsform des erfindungsgemäßen Verfahrens wird so vorgegangen, dass Auflager zum Reinigen vom Fördermittel abgenommen werden und dass gereinigte Auflager am Fördermittel wieder angebracht werden.

In einer beispielhaften Ausführungsform des erfindungsgemäßen Verfahrens wird so vorgegangen, dass ein Fördermittel verwendet wird, das zwei in unterschiedlichen Höhenlagen ausrichtbare Förderbänder mit Auflagern aufweist, um Isolierglas-Rohlinge in Form von Stufenelementen zu fördern.

In einer beispielhaften Ausführungsform des erfindungsgemäßen Verfahrens wird so vorgegangen, dass das Fördern von Isolierglas-Rohlingen durch zusätzliche, am Isolierglas-Rohling angreifende Fördereinrichtungen, wie Sauger, Unterdruck-Förderbänder, mechanische Mitnehmer und dgl., unterstützt wird.

In einer beispielhaften Ausführungsform des erfindungsgemäßen Verfahrens wird so vorgegangen, dass ein Fördermittel verwendet wird, dessen Auflager voneinander Abstände aufweisen, die im Wesentlichen dem Doppelten der Länge des Bereiches entsprechen, in dem Versiegelung im Bereich einer Ecke des Isolierglas-Rohlings über den Rand des Isolierglas-Rohlings übersteht.

Im Rahmen der Erfindung werden bevorzugt Fördermittel verwendet, die als Förderbänder in Form von Zahnriemen ausgebildet sind. Daneben sind auch gewöhnliche Riemenförderer mit Auflagern, gelochte Metallbänder mit Auflagern, deren Löcher in auf den Umlenkrollen angebrachte Stifte eingreifen, oder Gelenkbänder in Betracht gezogen.

Im Rahmen der Erfindung werden bevorzugt Fördermittel verwendet, deren Auflager voneinander gleiche Abstände haben, wobei die Abstände beispielsweise im Wesentlichen das Doppelte der Länge des Bereiches an der Ecke eines Isolierglas-Rohlings ist, in dem Versiegelungsmasse über den Umfang des Isolierglas-Rohlings vorstehen kann.

Im Rahmen der Erfindung ist auch in Betracht gezogen, Fördermittel einzusetzen, deren Auflager voneinander unterschiedliche Abstände haben.

Durch Leervorschub des Fördermittels kann das Fördermittel so ausgerichtet (bewegt) werden, dass die Lage der Auflager auf den vom Fördermittel zu übernehmenden Isolierglas-Rohling abgestimmt ist, und diese mit Eckbereichen des Isolierglas-Rohlings in Berührung treten.

Bevorzugt ist es im Rahmen der Erfindung, Fördermittel zu verwenden, die möglichst wenige Auflager aufweisen, um die Gefahr von Verschmutzungen klein zu halten.

Wenn im Rahmen der Erfindung Fördermittel verwendet werden sollen, bei denen die Abstände der Auflager voneinander unterschiedlich groß, beispielsweise veränderbar, sind, kann dies herbeigeführt werden, indem vom Fördermittel Auflager entfernt werden oder ein Fördermittel angebracht wird.

Es ist eine Ausführungsform in Betracht gezogen, ein Fördermittel zu verwenden, das zwei endlose Förderbänder umfasst, die synchron angetrieben werden, deren Relativlage zueinander aber verstellbar ist. Dabei ist vorgesehen, dass die Auflager auf jedem der Förderbänder das daneben angeordnete Förderband übergreifen. Durch Verändern der Relativlage der Förderbänder zueinander kann der Abstand der Auflager voneinander an die jeweils gewünschten und erforderlichen Gegebenheiten angepasst werden.

Ein Vorteil des erfindungsgemäßen Verfahrens liegt darin, dass beim Übernehmen eines Isolierglas-Rohlings durch ein Fördermittel mit Auflagern vermieden wird, dass durch das Auftreffen des Isolierglas-Rohlings auf ein Auflager ein Stoß oder Schlag ausgeübt wird.

Das erfindungsgemäße Fördermittel kann als endloses Förderband mit Auflagern ausgebildet sein.

Es ist aber auch in Betracht gezogen, das Fördermittel als Kette auszuführen, wobei in Betracht gezogen ist, einzelne Auflager aus ihrer Wirkstellung zurückzuziehen, um zu verhindern, dass diese mit dem Isolierglas-Rohling im Bereich einer seiner Ecken in Berührung kommen.

Ein Vorteil des erfindungsgemäßen Verfahrens liegt darin, dass Schrägbrüche an Ecken der Glasscheiben vermieden sind, da dort keine das Isolierglas abstützenden Anlagenteile (Auflager) angreifen. Damit verbunden ist auch der vorteilhafte Effekt, dass die Abnützung der Fördermittel klein gehalten werden kann.

Ein Vorteil erfindungsgemäß verwendeter Fördermittel liegt auch darin, dass diese, anders als z.B. die Fördermittel der AT 384 096 B, an die Dicke von Isolierglas-Rohlingen bzw. Isolierglas nicht angepasst werden müssen.

Weitere Einzelheiten und Merkmale des erfindungsgemäßen Verfahrens ergeben sich aus der nachstehenden Beschreibung unter Bezugnahme auf die angeschlossenen Zeichnungen. Es zeigt:
- Fig. 1: den Idealfall einer Versiegelung eines Isolierglas-Rohlings,
- Fig. 2: über den Umfang des Isolierglas-Rohlings vorstehende Versiegelungsmasse, insbesondere im Eckbereich eines Isolierglas-Rohlings,
- Fig. 3: eine bekannte Ausführungsform eines Fördermittels für Isolierglas-Rohlinge,
- Fig. 4: eine Fördereinrichtung (bekannt) für Isolierglas-Rohlinge mit zwei nebeneinander angeordneten Förderbändern,
- Fig. 5: schematisch einen Teil eines erfindungsgemäß einsetzbaren Fördermittels,
- Fig. 6: die Zuordnung des Isolierglas-Rohlings zu einem Fördermittel beim Ausführen des erfindungsgemäßen Verfahrens,
- Fig. 7: verschiedene Ausführungsformen von Auflagern an erfindungsgemäßen Fördermitteln,
- Fig. 8: die Anordnung von Fördermitteln in einer Versiegelungsstation,
- Fig. 9: die Anwendung eines erfindungsgemäßen Verfahrens bei Stufenelementen,
- Fig. 10: eine Variante der Anwendung des erfindungsgemäßen Verfahrens bei Stufenelementen und
- Fig. 11: ein im Rahmen der Erfindung verwendbares Fördermittel mit Auflagern, deren Abstände voneinander veränderbar sind.

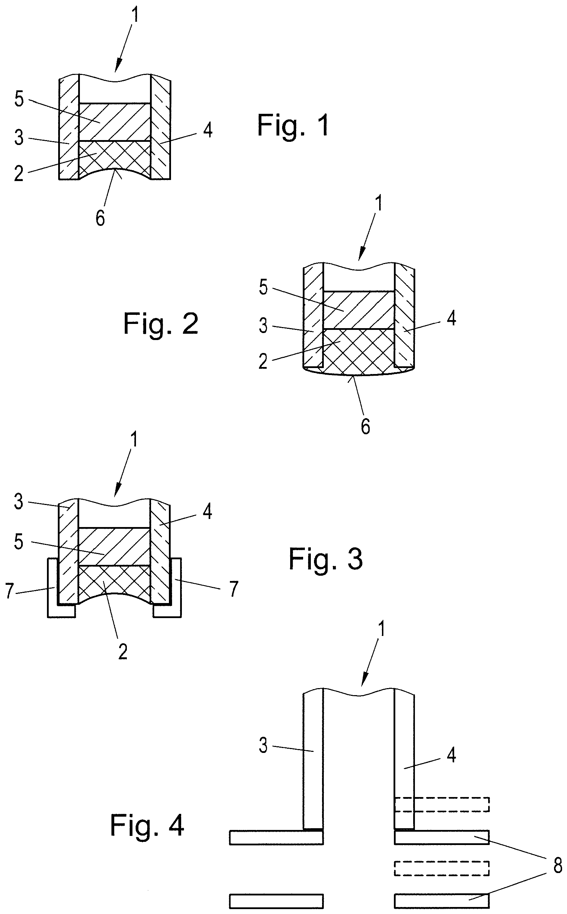

Fig. 1 zeigt in einer Teilansicht eines Schnittes durch ein Zweischeibenisolierglas 1 die Idealform einer Versiegelung 2. Bei dieser Idealform ist die Versiegelungsmasse in der Randfuge, die seitlich von den Rändern der Glasscheiben 3 und 4 und nach innen durch den Abstandhalter 5 begrenzt wird, so mit Versiegelungsmasse gefüllt, dass diese nicht über die Innenkanten der Ränder der Glasscheiben 3 und 4 ragt und bevorzugt eine konkave Außenfläche 6 aufweist.

Fig. 2 zeigt, wie eine Versiegelung 2 insbesondere im Bereich von Ecken von Isolierglas 1 eine konvexe Außenfläche 5 aufweist, also über den Umfangsrand des Isolierglas 1 vorsteht und auch die Ränder der Glasscheiben 3 und 4 übergreift.

In Fig. 3 ist eine an sich bekannte Ausführungsform eines Fördermittels für den Transport versiegelter Isolierglas-Rohlinge gezeigt, wie sie beispielsweise aus der AT 384 596 B bekannt ist. Bei diesem bekannten Fördermittel sind hakenförmige Auflager 7 vorgesehen, die an Endlosketten (nicht gezeigt) montiert sind und lediglich die Außenseiten der Ränder der Glasscheiben 3 und 4 von Isolierglas 1 untergreifen.

In Fig. 4 ist eine weitere Ausführungsform eines bekannten Fördermittels gezeigt, das zwei voneinander getrennte Förderbänder 8 aufweist, die den Rand der Glasscheiben 3 und 4 von Isolierglas untergreifen und - wie strichliert eingezeichnet - für den Transport von Stufenelementen in unterschiedlichen Höhenlagen ausgerichtet werden können.

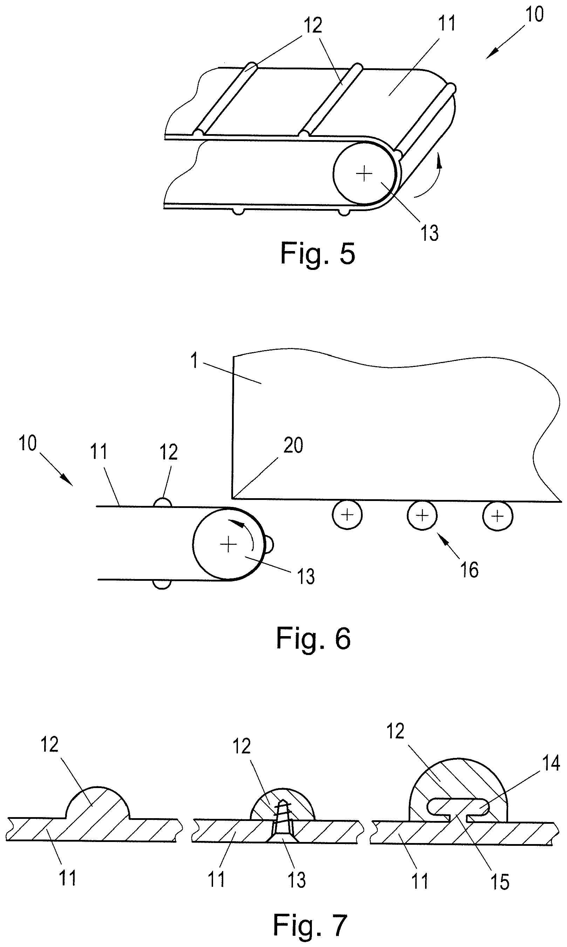

In Fig. 5 ist in einer Teilansicht ein Fördermittel 10 gezeigt, das als endloses Förderband 11 ausgebildet ist. Das Förderband 11 kann ein Zahnriemen sein, damit eine gute Verbindung zwischen den antreibenden Umlenkrollen 13 und dem Förderband 12 gegeben ist. Wie in Fig. 5 gezeigt, sind auf dem Förderband 11 Auflager 12 vorgesehen, die als quer zur Längserstreckung des Förderbandes 11 ausgerichtete Rippen ("Bänkchen") ausgebildet sind.

Fig. 7 zeigt, dass die Auflager 12 mit dem Förderband 11 einteilige Ausformungen des Förderbandes 11, also örtliche Verdickungen desselben, sein können. Alternativ können, wie in der mittleren Darstellung von Fig. 7 gezeigt, die Auflager 11 durch Schrauben 13 oder andere Befestigungsmittel mit dem Endlosglied des Förderbandes verbunden sein.

Eine weitere in Fig. 7 gezeigte Möglichkeit, Auflager 12 mit dem Förderband 11 zu verbinden, ist es dass das Auflager 12 auf seiner dem Förderband 11 zugekehrten Seite eine hinterschnittene Nut 14 aufweist, mit der es über eine gegengleich profilierte Leiste 15 des Förderbandes 11 geschoben werden kann.

Die beiden letztgenannten Ausführungsformen erlauben es, Auflager 12 vom Förderband 11 des erfindungsgemäß verwendeten Fördermittels 10 zu entfernen oder aber zusätzliche Auflager 12 anzubringen. So können die Abstände zwischen benachbarten Auflagern 12 verändert (vergrößert/verkleinert) werden.

Die Auflager 12 können, wie in Fig. 5 und 7 angedeutet, im Querschnitt halbrunde Rippen sein. Die Erzeugenden der Hüllfläche der rippenförmigen Auflager 12 gemäß Fig. 5 und 7 sind gerade. In abgeänderten Ausführungsformen können die Auflager 12 konkav gekrümmte Erzeugende aufweisen und beispielsweise im Wesentlichen V-förmig ausgebildet sein, wie dies im Prinzip aus der WO 92/05333 A bekannt ist.

Im Rahmen der Erfindung ist in Betracht gezogen, dem unteren Trum des Förderbandes 12 erfindungsgemäß verwendeter Fördermittel 10 Vorrichtungen zum Reinigen von Auflagern 12 zuzuordnen, damit von diesen allenfalls anhaftende Versiegelungsmasse entfernt wird. Diese Reinigungsvorrichtungen können Bürsten sein, wobei rotierend angetriebene Rundbürsten (vgl. WO 92/05333A) in Betracht gezogen sind.

Fig. 6 zeigt, wie ein Isolierglas-Rohling 1, der auf einem Rollenförderer 16 von rechts der Fig. 6 kommend, z.B. aus einer Zusammenbaustation, in der Isolierglas-Rohlinge aus Glasscheiben 3, 4 und Abstandhaltern 5 zusammengebaut werden, herangefördert wird, von einem erfindungsgemäßen Fördermittel 10 übernommen wird. Es ist ersichtlich, dass die Bewegungen des Isolierglas-Rohlings 1 einerseits und des Fördermittels 10 andererseits so aufeinander abgestimmt sind, dass im Bereich der Ecke 20 des (versiegelten) Isolierglas-Rohlings, also dort, wo die Versiegelung so aussehen kann, wie dies in Fig. 2 gezeigt ist, und über den Umfang des Isolierglas-Rohlings 1 bereichsweise vorstehend, gerade kein Auflager 12 am Isolierglas-Rohling 1 angreift.

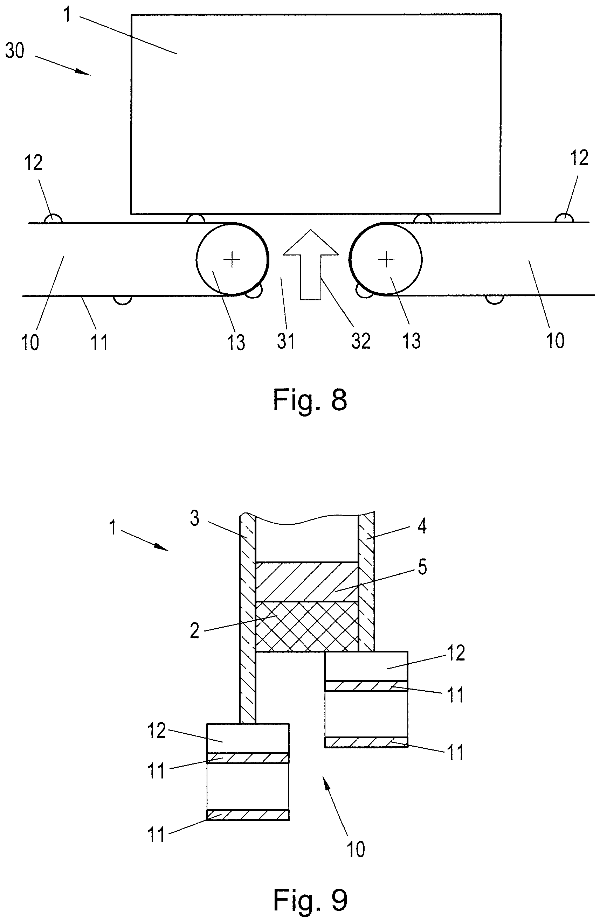

Fig. 8 zeigt die Situation in einer Versiegelungsstation 30, wobei zwei Fördermittel 10 mit Förderbändern 11, die mit Auflagern 12 bestückt sind, verwendet werden und im Spalt 31 zwischen den beiden Fördermitteln 10 eine Versiegelungsdüse 32 vorgesehen ist, die durch einen Pfeil angedeutet ist. Es ist in Fig. 8 erkennbar, dass im Bereich der Ecken 20 des Isolierglas-Rohlings 1 keine Auflager 12 der erfindungsgemäß verwendeten Fördermittel 10 angreifen, sodass keine Gefahr besteht, dass Fördermittel 10, deren Förderbänder 11 und/oder deren Auflager 12 durch überstehende Versiegelung 2 (Fig. 2) verschmutzt werden.

In Fig. 9 ist eine Ausführungsform gezeigt, bei der das erfindungsgemäß verwendete Fördermittel 10 zwei voneinander getrennte, endlose Förderbänder 11 mit Auflagern 12 umfasst, die in unterschiedlichen Höhenlagen ausgerichtet werden können. Dies erlaubt es, unter Anwendung des erfindungsgemäßen Verfahrens, Stufenelemente, also Isolierglas-Rohlinge 1 mit unterschiedlich großen Glasscheiben 3, 4, so zu transportieren, dass im Eckbereich keine Auflager 12 am Isolierglas-Rohling 1 angreifen.

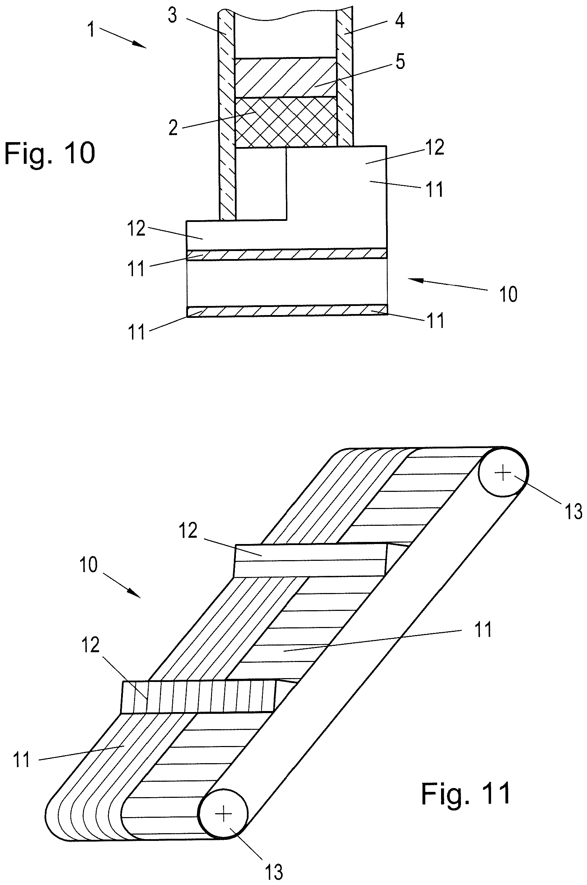

In Fig. 10 ist eine weitere Ausführungsform eines im Rahmen der Erfindung verwendbaren Fördermittels 10 gezeigt, bei dem an dem endlosen Förderband 11 des Fördermittels 10 L-förmige Auflager 12 vorgesehen sind, die das Transportieren von Stufenelementen unter Anwendung des erfindungsgemäßen Verfahrens erlauben.

Im Rahmen der Erfindung ist in Betracht gezogen, dass die Abstände von Auflagern 12 auf dem Förderband 11 des Fördermittels 10 an die jeweils herrschenden Verhältnisse, insbesondere Größe der Isolierglas-Rohlinge 1 und Ähnliches, angepasst werden. Dies kann in einfacher Weise dadurch erfolgen, dass Auflager 12 am Förderband 11 des Fördermittels 10 dort angebracht werden, wo sie benötigt werden.

In Fig. 11 ist schematisch eine Ausführungsform gezeigt, die es erlaubt, die Abstände zwischen Auflagern 12 zu verändern. Bei dieser Ausführungsform umfasst das erfindungsgemäß verwendete Fördermittel 10 zwei nebeneinander angeordnete endlose Förderbänder 11. Auf jedem der Förderbänder 11 sind Auflager 12 befestigt, die über das andere, benachbarte Förderband 11 ragen, an diesem aber nicht befestigt sind.

In Fig. 11 ist gezeigt, dass das eine, durch Längs-Schraffierung gekennzeichnete Auflager 12 nur am in Fig. 11 linken Förderband 11 und das andere, durch Quer-Schraffierung gekennzeichnete Auflager 12 nur am in Fig. 11 rechten Förderband 11 befestigt ist. Diese Ausführungsform eines Fördermittels 10 erlaubt es, durch Relativverstellen der zwei Förderbänder 11 zueinander, die Abstände der Auflager 12 voneinander zu verändern. Wenn das in Fig. 11 gezeigte Fördermittel 10 zum Transportieren von Isolierglas-Rohlingen 1 verwendet wird, werden beide Förderbänder 11 synchron angetrieben.

Im Rahmen der Erfindung ist in Betracht gezogen, den Transport von Isolierglas-Rohlingen 1 vor, während und nach dem Versiegeln durch ein erfindungsgemäß verwendetes Fördermittel 10 mit Auflagern 12 durch weitere, mit dem Fördermittel synchron bewegte Fördereinrichtungen zu unterstützen. Diese weiteren Fördereinrichtungen können als Mitnehmer ausgebildete Sauger sein, die synchron zur Bewegung des Fördermittels 10 bewegt werden und seitlich an einer der Glasscheiben 3 oder 4 des Isolierglas-Rohlings 1 angreifen.

Alternativ können mit Unterdruck beaufschlagte Saugbänder vorgesehen sein oder einfach mechanische Mitnehmer, die an einem der lotrechten Ränder von Isolierglas-Rohlingen 1 angreifen.

In diesem Fall übernimmt die zusätzliche Fördereinrichtung das Bewegen (den Vorschub) eines Isolierglas-Rohlings 1 wenigstens zum überwiegenden Teil und das erfindungsgemäß vorgesehene Fördermittel 10 mit den Auflagern 12 nimmt das Gewicht (oder wenigstens den Großteil desselben) des Isolierglas-Rohlings 1 auf.

Fördermittel 10 mit Auflagern 12, insbesondere Fördermittel 10 mit Förderbändern 11, die Auflager 12 aufweisen (Fig. 5-7 und 11), haben auch den Vorteil, dass Einrichtungen zum Entfernen von Isolierglas-Rohlingen 1 oder von Isolierglas, z.B. aus einer Versiegelungsstation, Isolierglas-Rohlinge 1 oder Isolierglas untergreifen können, da zwischen dem unteren Rand des Isolierglas-Rohlings 1 oder von Isolierglas und dem Förderband 11 wegen der Auflager 12 Freiraum vorliegt.

Zusammenfassend kann ein Ausführungsbeispiel der Erfindung wie folgt beschrieben werden:
Beim Bewegen von Isolierglas-Rohlingen 1 vor, während und nach dem Versiegeln derselben werden Fördermittel 10 mit den Isolierglas-Rohlinge unterstützenden und bewegenden Auflagern 12 verwendet. Die Auflager 12 am Fördermittel 10 werden relativ zum Isolierglas-Rohling 1 so ausgerichtet, dass im Bereich von Ecken 20 des Isolierglas-Rohlings 1, also dort, wo Versiegelung 2 über den Außenumfang des Isolierglas-Rohlings 1 überstehen kann, keine Auflager 12 am Isolierglas-Rohling anliegen.

## Patentansprüche

1. Verfahren zum Fördern von Isolierglas-Rohlingen (1), bei dem Fördermittel (10) verwendet werden, die Auflager (12) tragen, wobei der Isolierglas-Rohling (1) mit einem seiner Ränder, insbesondere mit seinem unteren Rand, auf mindestens zwei Auflagern (12) aufsteht, wobei die Auflager (12) am Fördermittel (10) ausschließlich mit Abstand von Ecken (20) des Isolierglas-Rohlings (1), den Isolierglas-Rohling (1) unterstützend und fördernd, angreifen, **dadurch gekennzeichnet, dass** beim Heranfördern eines Isolierglas-Rohlings (1) die Position einer Ecke (20) desselben erfasst wird, dass die Relativbewegung zwischen Isolierglas-Rohling (1) einerseits und Fördermittel (10) mit Auflagern (12) anderseits, durch Wahl des Unterschiedes zwischen den Bewegungsgeschwindigkeiten des Isolierglas-Rohlings (1) einerseits und des Fördermittels (10) mit Auflagern (12) anderseits, so gewählt wird, dass Auflager (12) beim Übernehmen des Isolierglas-Rohlings (1) durch das Fördermittel (10) ausschließlich mit Abstand von Ecken (20) des Isolierglas-Rohlings (1) angeordnet werden.

2. Verfahren nach Anspruch 1, **dadurch gekennzeichnet, dass** Auflager (12) gereinigt werden, während sie vom Isolierglas-Rohling (1) Abstand aufweisen.

3. Verfahren nach Anspruch 1 oder 2, **dadurch gekennzeichnet, dass** Auflager (12) verwendet werden, die rippenförmig, quaderförmig, L-förmig oder mit konkaver, z.B. gewinkelter, Wirkfläche ausgebildet sind.

4. Verfahren nach einem der Ansprüche 1 bis 3, **dadurch gekennzeichnet, dass** Auflager (12) verwendet werden, die aus einem Werkstoff bestehen oder deren Außenfläche mit einem Werkstoff belegt ist, der gegenüber Versiegelungsmasse verringerte Haftung aufweist.

5. Verfahren nach einem der Ansprüche 1 bis 4, **dadurch gekennzeichnet, dass** Auflager (12) verwendet werden, die Ausformungen des Fördermittels (10), insbesondere seines Förderbandes (11), sind.

6. Verfahren nach einem der Ansprüche 1 bis 5, **dadurch gekennzeichnet, dass** Auflager (12) verwendet werden, die mit dem Fördermittel (10) lösbar verbunden, beispielsweise angeschraubt oder aufgeschoben, sind.

7. Verfahren nach einem der Ansprüche 1 bis 6, **dadurch gekennzeichnet, dass** als Fördermittel (10) wenigstens ein endloses, über Umlenkrollen (13) geführtes Förderband (11) verwendet wird.

8. Verfahren nach Anspruch 7, **dadurch gekennzeichnet, dass** Auflager (12) gereinigt werden, wenn sie sich am Untertrum des Förderbandes (11) befinden.

9. Verfahren nach einem der Ansprüche 1 bis 8, **dadurch gekennzeichnet, dass** die Bewegungsgeschwindigkeit des Fördermittels (10) mit den Auflagern (12) verändert wird.

## Claims

1. Method for conveying insulation glass blanks (1) in which conveying means (10) are used that bear supports (12), the insulation glass blank (1) with one of its edges, in particular with its lower edge, standing on at least two supports (12), the supports (12) acting on the conveying means (10) solely at a distance from corners (20) of the insulation glass blank (1), supporting and conveying the insulation glass blank (1), **characterized in that** when an insulation glass blank (1) is being delivered, the position of one corner (20) of the latter is detected, **in that** the relative movement between the insulation glass blank (1), on the one hand, and conveying means (10) with supports (12), on the other hand, is chosen by selection of the difference between the speeds of movement of the insulation glass blank (1), on the one hand, and of the conveying means (10) with supports (12), on the other hand, such that supports (12) are located exclusively at a distance from corners (20) of the insulation glass blank (1) when the insulation glass blank (1) is being accepted by the conveying means (10).

2. Method according to claim 1, **characterized in that** supports (12) are cleaned while they are at a distance from the insulation glass blank (1).

3. Method according to claim 1 or 2, **characterized in that** supports (12) are used that are designed rib-shaped, cuboidal, L-shaped or with a concave, for example angled, action surface.

4. Method according to one of claims 1 to 3, **characterized in that** supports (12) are used that consist of a material or whose outer surface is covered with a material that has adhesion that is reduced relative to the sealing compound.

5. Method according to one of claims 1 to 4, **characterized in that** supports (12) are used that are shapings of the conveying means (10), in particular of its conveyor belt (11).

6. Method according to one of claims 1 to 5, **characterized in that** supports (12) are used that are detachably connected to the conveying means (10), for example screwed or slipped on.

7. Method according to one of claims 1 to 6, **characterized in that** as conveying means (10), at least one endless conveyor belt (11) that is routed via deflection pulleys (13) is used.

8. Method according to claim 7, **characterized in that** supports (12) are cleaned when they are located on the lower strand of the conveyor belt (11).

9. Method according to one of claims 1 to 8, **characterized in that** the speed of movement of the conveying means (10) with the supports (12) is changed.

## Revendications

1. Procédé pour le transport d'ébauches de vitrages isolants (1), dans lequel il est prévu des moyens de transport (10) portant des supports (12), dans lequel l'ébauche de vitrage isolant (1) s'appuyant avec l'un de ses bords sur au moins deux supports (12), en particulier avec son bord inférieur, dans lequel les supports (12) sur le moyen de transport (10) engagent l'ébauche de vitrage isolant (1) en le supportant et en le transportant exclusivement à distance des coins (20) de l'ébauche de vitrage isolant (1), **caractérisé en ce que** lors du rapprochement d'une ébauche de vitrage isolant (1), la position d'un coin (20) de celle-ci est détectée, **en ce que** le déplacement relatif entre l'ébauche de vitrage isolant (1) d'une part et le moyen de transport (10) doté des supports (12) d'autre part est défini en réglant la différence entre les vitesses de déplacement de l'ébauche de vitrage isolant (1) d'une part et du moyen de transport (10) doté des supports (12) d'autre part, de telle façon que des supports (12) sont placés exclusivement à distance des coins (20) de l'ébauche de vitrage isolant (1) lors de la réception de l'ébauche de vitrage isolant (1) par le moyen de transport (10).

2. Procédé selon la revendication 1, **caractérisé en ce que** des supports (12) sont nettoyés pendant qu'ils se trouvent à distance de l'ébauche de vitrage isolant (1).

3. Procédé selon la revendication 1 ou 2, **caractérisé en ce que** les supports (12) utilisés présentent une forme nervurée, une forme parallélépipédique, une forme en L ou sont conçus avec une surface active concave, par exemple coudée.

4. Procédé selon l'une des revendications 1 à 3, **caractérisé en ce que** les supports (12) utilisés sont constitués d'un matériau ou la surface extérieure de ceux-ci est revêtue d'un matériau offrant une adhérence réduite par rapport à une masse de scellage.

5. Procédé selon l'une des revendications 1 à 4, **caractérisé en ce que** les supports (12) utilisés sont des déformations du moyen de transport (10), en particulier de la bande de transport (11) de celui-ci.

6. Procédé selon l'une des revendications 1 à 5, **caractérisé en ce que** les supports (12) utilisés sont reliés de façon amovible au moyen de transport (10), par exemple vissés ou enfoncés dans celui-ci.

7. Procédé selon l'une des revendications 1 à 6, **caractérisé en ce que** le moyen de transport (10) utilisé consiste au moins en une bande de transport sans fin (11), guidée par des rouleaux de renvoi (13).

8. Procédé selon la revendication 7, **caractérisé en ce que** des supports (12) sont nettoyés pendant qu'ils se trouvent sur la partie inférieure de la bande de transport (11).

9. Procédé selon l'une des revendications 1 à 8, **caractérisé en ce que** la vitesse de déplacement du moyen de transport (10) doté des supports (12) est modifiée.
